(19) Europäisches Patentamt
European Patent Office
Office européen des brevets

(11) **EP 3 080 175 B1**

(12) # EUROPÄISCHE PATENTSCHRIFT

(45) Veröffentlichungstag und Bekanntmachung des Hinweises auf die Patenterteilung:
**18.07.2018 Patentblatt 2018/29**

(21) Anmeldenummer: **14808994.9**

(22) Anmeldetag: **05.12.2014**

(51) Int Cl.:
***C08F 220/18*** *(2006.01)* ***F16F 9/30*** *(2006.01)*
***C08F 220/14*** *(2006.01)*

(86) Internationale Anmeldenummer:
**PCT/EP2014/076764**

(87) Internationale Veröffentlichungsnummer:
**WO 2015/086465 (18.06.2015 Gazette 2015/24)**

(54) **VERWENDUNG EINER POLYMERDISPERSION ZUR HERSTELLUNG VON ANTIDRÖHNMASSEN**

USE OF POLYMERIC DISPERSIONS FOR THE PRODUCTION OF VIBRATION DAMPER

UTILISATION D'UNE DISPERSION POLYMÉRIQUE POUR LA PRODUCTION D'UN MATÉRIAU ABSORBEUR DE VIBRATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2013 EP 13196734**
**04.04.2014 EP 14163585**

(43) Veröffentlichungstag der Anmeldung:
**19.10.2016 Patentblatt 2016/42**

(73) Patentinhaber: **BASF SE**
**67056 Ludwigshafen am Rhein (DE)**

(72) Erfinder:
- **DIMMER, Jörg-Alexander**
**68161 Mannheim (DE)**
- **WULFF, Dirk**
**67105 Schifferstadt (DE)**
- **PREISHUBER-PFLÜGL, Peter**
**68163 Mannheim (DE)**

(74) Vertreter: **BASF IP Association**
**BASF SE**
**G-FLP-C006**
**67056 Ludwigshafen (DE)**

(56) Entgegenhaltungen:
**EP-A2- 1 520 865** **WO-A1-2013/174611**
**JP-A- 2013 199 622**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 080 175 B1

## Beschreibung

Die Erfindung wie beansprucht betrifft die Verwendung einer Polymerdispersion zur Herstellung von Antidröhnmassen, wobei die Polymerdispersion mindestens ein Polymer enthält welches erhältlich ist durch Emulsionspolymerisation von radikalisch polymerisierbaren Monomeren und das Polymer ein gewichtsmittleres Molekulargewicht von mehr als 100000, vorzugsweise von mehr als 100000 bis 350000 aufweist. Die Erfindung betrifft auch entsprechende Antidröhnmassen, welche die Polymerdispersion enthalten sowie ein Verfahren zur Dämpfung von Vibrationen oder Schwingungen von Bauteilen von Fahrzeugen.

Durch Vibration oder Schwingungen von Bauteilen von Maschinen oder Fahrzeugen werden unerwünschte Geräusche erzeugt. Zur Geräuschminderung können die Bauteile mit sogenannten Antidröhnmassen, auch LASD-Massen (Liquid Applied Sound Damping) genannt, versehen werden. Schwingungsdämpfende Materialien sind beispielsweise beschrieben in Journal of Materials Science 36 (2001) 5733-5737, US 2004/0033354 und US 6502821. Die Ausrüstung von geometrisch komplexen, dreidimensionalen Bauteilen kann durch Aufsprühen einer Antidröhnmasse in Form einer wässrigen Dispersion erfolgen. Derartige Dispersionen enthalten in der Regel ein dispergiertes, viskoelastisches Polymer und anorganische Füllstoffe. Schwingungsdämpfende Zusammensetzungen auf Basis von wasserbasierten Polymerdispersionen und anorganischen Füllstoffen sowie weiterer Hilfsstoffe werden beschrieben in EP 1520865, WO 2007/034933, EP 2420412, WO 2012/010632 und in der europäischen Patentanameldung mit der Anmeldenummer 13179452.1. Die Güte einer Antidröhnmasse kann durch Messung der Biegeschwingungen im Resonanzkurvenverfahren nach EN ISO 6721-1:2011 und EN ISO 6721-3:1996 gemessen werden. Ein Maß für die schwingungsdämpfende Wirkung ist der Verlustfaktor tan delta. Bei der Verwendung von Antidröhnmassen auf Basis von viskoelastischen Polymeren ist der Verlustfaktor temperaturabhängig. Es werden Materialien gewünscht, die zu einem möglichst großen Verlustfaktor in dem Temperaturbereich führen, in welchem die Maschinen oder Fahrzeuge üblicherweise betrieben werden, z.B. zwischen 0 und 40 °C.

Bei auf wässrigen Systemen beruhenden Antidröhnmassen stellt die Wasseraufnahme der getrockneten Massen bei Kontakt mit Feuchtigkeit besondere Herausforderungen dar. Beim Trocknen kann es zu einer unerwünschten Blasenbildung, der Bildung von mehr oder weniger großen Poren oder einer unerwünschten Expansion kommen.

Aufgabe der vorliegenden Erfindung war es, weitere Materialien zur Verfügung zu stellen mit guten oder verbesserten schwingungsdämpfenden Eigenschaften und insbesondere einem guten Trocknungsverhalten, einer möglichst geringen Wasseraufnahme der getrockneten Massen und einer möglichst geringen Porosität der getrockneten Masse. Ein gutes Trocknungsverhalten zeichnet sich durch eine möglichst feine Porosität und eine möglichst geringe Volumenexpansion während der Trocknung aus.

Es wurde gefunden, dass die in bekannten Antidröhnmassen auf Basis von Polymerdispersionen enthaltenen polymeren Bindemittel durch spezifische Einstellung des Molekulargewichts der Polymere in ihren technischen Eigenschaften verbessert werden können.

Es wurde gefunden, dass bei Verwendung von bestimmten Polymerdispersionen als Bindemittel Antidröhnmassen zur Verfügung gestellt werden können mit guten schwingungsdämpfenden Eigenschaften, geringer Wasseraufnahme und gutem Trocknungsverhalten.

Gegenstand der Erfindung wie beansprucht ist daher die Verwendung einer Polymerdispersion zur Herstellung von Antidröhnmassen, wobei die Polymerdispersion mindestens ein Polymer enthält welches erhältlich ist durch Emulsionspolymerisation von radikalisch polymerisierbaren Monomeren und das Polymer ein gewichtsmittleres Molekulargewicht von mehr als 100000, vorzugsweise von mehr als 100000 bis 350000 aufweist. Eine bevorzugte Verwendung ist die Verwendung der erfindungsgemäßen Antidröhnmasse zur Schwingungsdämpfung von Karosserieteilen eines Fahrzeugs.

Gegenstand der Erfindung ist auch eine Antidröhnmasse, enthaltend

(i) die hierin näher beschriebene Polymerdispersion;
(ii) anorganische Füllstoffe; und
(iii) optional organische Füllstoffe.

Gegenstand der Erfindung ist auch die Verwendung der Antidröhnmasse zur Schwingungsdämpfung von Karosserieteilen eines Fahrzeugs oder als Masse für Unterbodenschutz eines Kraftfahrzeugs sowie ein Verfahren zur Dämpfung von Vibrationen oder Schwingungen von Bauteilen von Fahrzeugen, wobei

(1) eine erfindungsgemäße Antidröhnmasse zur Verfügung gestellt wird, und
(2) die Antidröhnmasse auf ein Bauteil eines Fahrzeuges aufgebracht und getrocknet wird.

Das gewichtsmittlere Molekulargewicht wird gemessen mittels Gelpermeationschromatographie (GPC) nach der Methode der Größenausschlusschromatographie (SEC). Dabei wird die Elutionskurve mit Hilfe einer Polystyrol-Eichkurve in die Molekulargewichtsverteilungskurve umgerechnet. Die bei der Messung verwendeten Parameter sind unten bei den Beispielen genannt.

Hauptmonomere sind Monomere, welche insgesamt mehr als 50 Gew.%, bezogen auf die Summe aller Monomere eines Polymers ausmachen.

Im Folgenden wird die Bezeichnung "(Meth)acryl..." und ähnliche Bezeichnungen als abkürzende Schreibweise verwendet für "Acryl... oder Methacryl...". Der Ausdruck "Cx-Alkyl(meth)-acrylat" umfasst Alkylacrylate und Alkylmethacrylate mit x C-Atomen in der Alkylgruppe.

Bei den erfindungsgemäß einzusetzenden Polymerdispersionen handelt es sich um Dispersionen von Polymeren in wässrigem Medium. Bei dem wässrigen Medium kann es sich z.B. ausschließlich um Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Dispersionen betragen vorzugsweise von 15 bis 75 Gew.-%, bevorzugt von 40 bis 60 Gew.-%, insbesondere größer 50 Gew.%. Der Feststoffgehalt kann z.B. durch entsprechende Einstellung der bei der Emulsionspolymerisation eingesetzten Wassermenge und/oder der Monomermengen erfolgen. Die mittlere Teilchengröße der in der wässrigen Dispersion dispergierten Polymerteilchen ist vorzugsweise kleiner 400 nm, insbesondere kleiner 300 nm. Besonders bevorzugt liegt die mittlere Teilchengröße zwischen 140 und 250 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Der pH-Wert der Polymerdispersion wird vorzugsweise auf pH größer 4 insbesondere auf einen pH-Wert zwischen 5 und 9 eingestellt.

Bei den durch Emulsionspolymerisation hergestellten Polymeren handelt es sich um Polymere, die durch radikalische Polymerisation von ethylenisch ungesättigten Verbindungen (Monomeren) erhältlich sind. Das Polymer ist aufgebaut vorzugsweise zu mindestens 40 Gew.% oder zu mindestens 60 Gew.%, oder zu mindestens 80 Gew.%, besonders bevorzugt zu mindestens 90 Gew.% oder zu 100 Gew.% aus einem oder mehreren der nachfolgend beschriebenen Hauptmonomeren. Die Hauptmonomeren sind vorzugsweise ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

Art und Menge der Monomeren sind vorzugsweise derart, dass die Glasübergangstemperatur des durch Emulsionspolymerisation hergestellten Polymers im Bereich von -60 °C bis kleiner oder gleich 70 °C oder im Bereich von -30 °C bis kleiner oder gleich 60 °C liegt, besonders bevorzugt im Bereich von -15 bis 50°C. Die Glasübergangstemperatur lässt sich bestimmen als sogenannte "midpoint temperature" durch Differential Scanning Calorimetrie (ASTM D 3418-08).

Geeignete Monomere sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind z.B. Butadien, Isopren und Chloropren.

Als Hauptmonomere bevorzugt sind $C_1$- bis $C_{10}$-Alkylacrylate und $C_1$- bis $C_{10}$-Alkylmethacrylate, insbesondere $C_1$- bis $C_8$-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Hexylacrylat, Octylacrylat und 2-Ethylhexylacrylat, 2-Propylheptylacrylat, Styrol sowie Mischungen dieser Monomere. Insbesondere sind die Polymere zu mindestens 60 Gew.%, besonders bevorzugt zu mindestens 80 Gew.% und ganz besonders bevorzugt zu mindestens 90 oder zu mindestens 95 Gew.% aus $C_1$ bis $C_{10}$ Alkyl(meth)acrylaten aufgebaut.

Neben den Hauptmonomeren kann das Polymer weitere Monomere enthalten, z.B. ethylenisch ungesättigte Monomere mit Carbonsäure-, Sulfonsäure- oder Phosphonsäuregruppen (Säuremonomere). Bevorzugt sind Carbonsäuregruppen. Genannt seien z. B. Acrylsäure, Methacrylsäure, Itaconsäure, Maleinsäure oder Fumarsäure.

Weitere Monomere sind z.B. auch Hydroxylgruppen enthaltende Monomere, insbesondere $C_1$-$C_{10}$-Hydroxyalkyl(meth)acrylate oder (Meth)acrylamid. Als weitere Monomere seien darüber hinaus Phenyloxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf.

Das Polymer ist aufgebaut aus

(a) 25 bis 75 Gew.%, vorzugsweise 30 bis 70 Gew.% mindestens eines Monomeren, welches, wenn es als Homopolymer polymerisiert ist, eine Glasübergangstemperatur von kleiner als 0°C, vorzugsweise von kleiner als -20°C aufweist, z.B. n-Propylacrylat, n-Butylacrylat, n-Hexylacrylat, 2-Ethylhexylacrylat;

(b) 24 bis 75 Gew.% ,vorzugsweise 29 bis 70 Gew.% mindestens eines Monomeren, welches, wenn es als Homopolymer polymerisiert ist, eine Glasübergangstemperatur von größer als 0°C, vorzugsweise von größer als 50°C aufweist, ausgewählt aus Methylacrylat, tert.-Butylacrylat, Methylmethacrylat, Ethylmethacrylat, n-Butylmethacrylat, iso-Butylmeth-acrylat, tert.-Butylmethacrylat, Acrylnitril, Methacrylnitril, Vinylacetat, (Meth)-acrylamid; und

(c) 0 bis 5 Gew.%, vorzugsweise 0,3 bis 3 Gew.% mindestens eines von den Monomeren (a) und (b) verschiedenen Monomeren mit mindestens einer Säuregruppe (Säuremonomere).

Ein besonders bevorzugtes Polymer ist aufgebaut aus

(a) 25 bis 75 Gew.% n-Butylacrylat

(b) 24 bis 75 Gew.% Methylmethacrylat

(c) 0,3 bis 3 Gew.% mindestens eines Säuremonomers ausgewählt aus Acrylsäure, Methacrylsäure und deren Gemisch.

Die Herstellung der Polymere kann durch Emulsionspolymerisation erfolgen, es handelt sich dann um ein Emulsionspolymerisat. Bei der Emulsionspolymerisation werden in der Regel ionische und/oder nicht-ionische Emulgatoren und/oder Schutzkolloide bzw. Stabilisatoren als grenzflächenaktive Verbindungen verwendet, um die Dispergierung der Monomeren in dem wässrigen Medium zu unterstützen. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Geeignete Emulgatoren sind beispielsweise ethoxylierte $C_8$- bis $C_{36}$- oder $C_{12}$- bis $C_{18}$-Fettalkohole mit einem Ethoxylierungsgrad von 3 bis 50 oder von 4 bis 30, ethoxylierte Mono-, Di- und Tri- $C_4$- bis $C_{12}$- oder $C_4$- bis $C_9$-Alkylphenole mit einem Ethoxylierungsgrad von 3 bis 50, Alkalimetallsalze von Dialkylestern der Sulfobernsteinsäure, Alkalimetall- und Ammoniumsalze von $C_8$- bis $C_{12}$-Alkylsulfaten, Alkalimetall- und Ammoniumsalze von $C_{12}$- bis $C_{18}$-Alkylsulfonsäuren und Alkalimetall- und Ammoniumsalze von $C_9$- bis $C_{18}$-Alkylarylsulfonsäuren. Kationaktive Emulgatoren sind z.B. Verbindungen mit mindestens einer Amino- oder Ammoniumgruppe und mindestens einer $C_8$-$C_{22}$-Alkylgruppe.

Weitere geeignete Emulgatoren sind Verbindungen der allgemeinen Formel

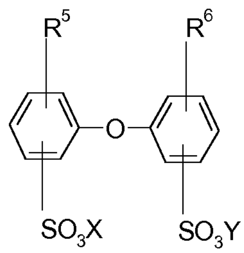

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen, in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1. Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208. Handelsnamen von Emulgatoren sind z. B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol® VSL, Emulphor® NPS 25. Geeignet sind auch copolymerisierbare Emulgatoren, welche eine radikalisch polymerisierbare, ethylenisch ungesättigte Doppelbindung enthalten, z.B. reaktive anionische Emulgatoren wie Adeka® Resoap SR-10.

Die Emulsionspolymerisation erfolgt in der Regel bei 30 bis 130, vorzugsweise 50 bis 95 °C oder 50 bis kleiner

90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Emulsionspolymerisation kann in Gegenwart mindestens eines Schutzkolloids durchgeführt. Das bedeutet, dass die Schutzkolloide vorgelegt oder zusammen mit Monomeren dem Polymerisationsgefäß zugeführt werden. Sie werden vorzugsweise bei der Emulsionspolymerisation vorgelegt, während gegebenenfalls zusätzlich eingesetzte Emulgatoren zusammen mit den Monomeren auch im Laufe der Polymerisation zugeführt werden können.

Bei der Emulsionspolymerisation können die üblichen und bekannten Hilfsstoffe, wie z.B. wasserlösliche Initiatoren und Regler eingesetzt werden. Wasserlösliche Initiatoren für die Emulsionspolymerisation sind z.B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations (Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure oder tert-Butylhydroperoxid/Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden. Zur Entfernung der Restmonomeren wird üblicherweise auch nach dem Ende der eigentlichen Emulsionspolymerisation Initiator zugesetzt.

Bei der Polymerisation können Molekulargewichtsregler eingesetzt werden, z. B. in Mengen von 0 bis 0,8 Gew.-Teile, bezogen auf 100 Gew.-Teile der zu polymerisierenden Monomeren, wodurch die Molmasse verringert wird. Geeignet sind z. B. Verbindungen mit einer Thiolgruppe wie tert.-Butylmercaptan, Thioglycolsäureester, z.B. 2-Ethylhexylthioglycolat (EHTG), Mercaptoethanol, Mercaptopropyltrimethoxysilan, n-Dodecylmercaptan oder tert.-Dodecylmercaptan (t-DMK). Bevorzugt sind EHTG oder t-DMK. Weiterhin können Regler ohne Thiolgruppe verwendet werden, wie z.B. C6- bis C20-Kohlenwasserstoffe, welche bei Wasserstoffabstraktion ein Pentadienylradikal bilden, z.B. Terpinolen. In einer Ausführungsform ist das Emulsionspolymerisat hergestellt unter Verwendung von 0,05 bis 0,7 Gew.% oder von weniger als 0,4 Gew.%, bezogen auf die Monomermenge, an mindestens einem Molekulargewichtsregler.

Die erfindungsgemäß einzusetzenden Polymere weisen bestimmte gewichtsmittlere Molekulargewichte aus. Es hat sich gezeigt, dass Polymere mit einem gewichtsmittleren Molekulargewicht von größer 100000 bei Verwendung in Antidröhnmassen zu einer signifikant geringeren Wasseraufnahme führen. Die Polymere sind hochmolekular aber vorzugsweise unvernetzt oder nur geringfügig vernetzt. Die Einstellung von erfindungsgemäßen Molekulargewichten kann durch eine oder mehrere der folgenden Maßnahmen erfolgen:

- dadurch, dass bei der Emulsionspolymerisation Molekulargewichtsregler in einer Menge von weniger als 0,4 Gewichtsteilen auf 100 Gewichtsteile Monomere oder keine Molekulargewichtsregler eingesetzt werden; und /oder
- dadurch, dass die Emulsionspolymerisation bei relativ niedrigen Temperaturen, z.B. bei Temperaturen kleiner 90 °C durchgeführt wird; und/oder
- dadurch dass bei der Emulsionspolymerisation Initiatoren (z.B. Natriumperoxodisulfat) in einer Menge von 0,1 bis weniger als 0,7 Gewichtsteilen auf 100 Gewichtsteile Monomere eingesetzt werden; und/oder
- dadurch, dass bei der Emulsionspolymerisation keine oder nur wenig vernetzende Monomere (z.B. 1,4-Butandioldiacrylat), z.B. in einer Menge von weniger als 0,2 Gewichtsteilen auf 100 Gewichtsteile Monomere eingesetzt werden.

In einer ausführungsform erfolgt die Emulsionspolymerisation einstufig und/oder ohne Schutzkolloid.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

In einer Ausführungsform weist das Polymer eine Kern-Schale Morphologie auf oder ist durch mindestens zweistufige Polymerisation herstellbar, wobei die Glasübergangstemperatur des den Kern bildenden Polymers (A) um mindestens 10°C, vorzugsweise um mindestens 15°C oder mindestens 20 °C, z.B. um 10 bis 50°C verschieden ist von der Glasübergangstemperatur des die Schale bildenden Polymers (B), bzw. wobei die Glasübergangstemperatur des bei der ersten Polymerisationsstufe entstehenden Polymers (B) von der Glasübergangstemperatur des bei der zweiten Polymerisationsstufe (A) entstehenden Polymers um mindestens 10°C, vorzugsweise um mindestens 15°C oder mindestens 20 °C, z.B. um 10 bis 50°C verschieden ist. Diese Ausführungsform betrifft also wässrige Polymerdispersionen, worin die Polymerteilchen mindestens zwei voneinander verschiedene Polymerphasen (A) und (B) mit unterschiedlichen Glasübergangstemperaturen aufweisen. Dies hat den Vorteil, dass damit hergestellte Antidröhnmassen in einem größeren Temperaturbereich schwingungsdämpfende Wirkungen besitzen. Vorzugsweise ist die Glasübergangstemperatur des Kerns größer als die Glasübergangstemperatur der Schale.

Bei den Kern-Schale-Partikeln ist die Oberfläche des Kerns ganz oder mindestens teilweise mit den die Schale bildenden Polymeren bedeckt. Kern-Schale-Partikel haben vorzugsweise einen durchschnittlichen Teilchendurchmesser von 10 nm bis 1 Mikrometer oder von 20 nm bis 500 nm, messbar mit einem dynamischen Lichtstreuungsphotometer. Sowohl bei Polymer (A) als auch bei dem davon verschiedenen Polymer (B) handelt es sich vorzugsweise um Acrylatcopolymere, wobei Art und Menge der Monomeren so sind, dass die Mindestdifferenz der Glasübergangstemperaturen gewährleistet ist. Geeignete Acrylatcopolymere zur Bildung von mindestens zweiphasigen Polymerteilchen sind z.B. beschrieben in WO 2007/034933, EP 1520865 und DE19954619.

Polymerdispersionen mit mindestens zweiphasigen Polymerteilchen sind vorzugsweise erhältlich durch radikalische wässrige Emulsionspolymerisation umfassend die folgenden Schritte:

a) Polymerisation einer ersten Monomercharge M1 zu einem Polymer P1 mit einer theoretischen Glasübergangstemperatur Tg(1) (nach Fox) und

b) Polymerisation einer zweiten Monomercharge M2 zu einem Polymer P2 mit einer von Tg(1) verschiedenen, theoretischen Glasübergangstemperatur Tg(2) (nach Fox) in der wässrigen Dispersion des Polymeren P1,

wobei vorzugsweise entweder bei der Polymerisation der Monomercharge M1 oder bei der Polymerisation der Monomercharge M2 wenigstens ein Kettenübertragungsreagenz eingesetzt wird.

Unter einer theoretischen Glasübergangstemperatur versteht man hier und im Folgenden die nach Fox aufgrund der Monomerzusammensetzung der Monomercharge M1 bzw. der Monomercharge M2 berechnete Glasübergangstemperatur Tg(1) bzw. Tg(2). Nach Fox (T.G. Fox, Bull. Am. Phys. Soc. (Ser. II) 1, 123 [1956] und Ullmann's Enzyklopädie der technischen Chemie, Weinheim (1980), S. 17, 18) gilt für die Glasübergangstemperatur von Mischpolymerisaten bei großen Molmassen in guter Näherung

$$1/Tg = x1/Tg(1) + x2/Tg(2) + ... + xn/Tg(n)$$

wobei x1, x2, ... xn die Massenbrüche 1, 2, ..., n und Tg(1), Tg(2), ..., Tg(n) die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Erfindungsgemäß bevorzugt wird die Monomercharge M2 so gewählt, dass die theoretische Glasübergangstemperatur (nach Fox) der resultierenden Polymerphase P2 oberhalb der theoretischen Glasübergangstemperatur des zuerst hergestellten Polymeren P1 liegt. Bevorzugt weist dann die Monomercharge M2 eine Zusammensetzung auf, die zu einer theoretischen Glasübergangstemperatur Tg(2) der Polymerphase P2 führt, die oberhalb 30 °C, vorzugsweise oberhalb 40 °C und insbesondere im Bereich von 50 bis 120 °C liegt. Die Monomercharge M1 weist für den Fall, dass Tg(2) größer als Tg(1) ist, vorzugsweise eine Monomerzusammensetzung auf, die zu einer theoretischen Glasübergangstemperatur Tg(1) der resultierenden Polymerphase P1 führt, die im Bereich von -40 bis +40 °C, vorzugsweise im

Bereich von -30 bis +30 °C und ganz besonders bevorzugt im Bereich von -10 bis +25 °C liegt. Sofern Tg(1) größer als Tg(2) ist, gilt für die bevorzugten Glasübergangstemperaturen der Polymerphase P1 das zuvor für P2 im Falle von Tg(2) größer Tg(1) gesagte. Für die Glasübergangstemperaturen der Polymerphase P2 gilt dann entsprechend das zuvor für Tg(1) gesagte.

In den erfindungsgemäßen Polymerdispersionen liegt das Gewichtsverhältnis der Polymerphasen zueinander im Bereich von 20 : 1 bis 1 : 20, vorzugsweise 9 : 1 bis 1 : 9. Erfindungsgemäß werden solche Polymerdispersionen bevorzugt, worin der Anteil an Polymerphase mit der niedrigen Glasübergangstemperatur überwiegt. Sofern P1, wie erfindungsgemäß bevorzugt, die niedrigere Glasübergangstemperatur aufweist, liegt das Verhältnis P1 : P2 insbesondere im Bereich von 1 : 1 bis 5 : 1 und besonders bevorzugt im Bereich von 2 : 1 bis 4 : 1. Die Gewichtsverhältnisse der Polymerphasen P1 und P2 entsprechen dabei näherungsweise den Mengenverhältnissen der Monomerchargen M1 und M2. Im Falle von Tg(1) größer Tg(2) liegen die Mengenverhältnisse P1 : P2 insbesondere im Bereich von 1 : 1 bis 1 : 5 und besonders bevorzugt im Bereich von 1 : 2 bis 1 : 4.

Gegenstand der Erfindung ist auch eine Antidröhnmasse, enthaltend

(i) eine oben näher beschriebene Polymerdispersion, enthaltend mindestens ein durch Emulsionspolymerisation von radikalisch polymerisierbaren Monomeren erhältliches, in Wasser dispergiertes Polymer mit einem gewichtsmittleren Molekulargewicht von mehr als 100000, vorzugsweise von mehr als 100000 bis 350000;
(ii) anorganische Füllstoffe; und
(iii) optional organische Füllstoffe.

Die Antidröhnmasse besteht aus

(a) 5 bis 50 Gew.%, vorzugsweise 5 bis 20 Gew.% der Polymerdispersion, wobei sich die Mengenangabe auf den Feststoffgehalt der Polymerdispersion bezieht,
(b) 40 bis 80 Gew.%, vorzugsweise 60 bis 70 Gew.% anorganische Füllstoffe,
(c) 0 bis 40 Gew.%, vorzugsweise 5 bis 20 Gew.% organische Füllstoffe,
(d) 10 bis 40 Gew.%, vorzugsweise 23 bis 28 Gew.% Wasser und
(e) 0 bis 10 oder 0 bis 5 Gew.%, vorzugsweise 0,1 bis 3 Gew.% Hilfsstoffe.

Geeignete anorganische Füllstoffe sind z.B. Calciumcarbonat, Kaolin, Mica, Silica, Kreide, Mikrodolomit, Quarzmehl, Glimmer, Talkum, Ton, Bariumsulfat, Tonerde, Eisenoxid, Titandioxid, Glaspulver, Glasschuppen, Magnesiumcarbonat, Aluminiumhydroxid, Bentonit, Flugasche, Kiselguhr, Perlit, Ruß, Graphit, Tonmineralien, Mikrodolomit, Quarzmehl und Glimmer. Bevorzugt werden schuppenförmige Füllstoffe wie z.B. Mica eingesetzt, allein oder in Kombination mit gewöhnlichen anorganischen Pigmenten wie Calciumcarbonat, Bariumsulfat, Kaolin, Silica, Kreide oder Talkum.

Organische Füllstoffe sind Pulverlacke, z.B. Epoxypulverlacke, Polymerpulver aus zum Beispiel gemahlenen Ethylen/Vinylacetat Copolymer (EVA)-Festharzen, getrockneten Acrylatdispersionen.

Vorzugsweise werden 50 bis 700 oder 100 bis 550 Gewichtsteile anorganischer Füllstoff auf 100 Gewichtsteile Polymerdispersion eingesetzt, wobei vorzugsweise 30 bis 150 oder 40 bis 120 Gewichtsteile schuppenförmige Füllstoffe auf 100 Gewichtsteile Polymerdispersion eingesetzt werden.

Hilfsstoffe, die vorzugsweise zu mindestens 0,1 Gew.%, z.B. von 0,1 bis 10 Gew.% oder von 0,2 bis 5 Gew.% oder von 0,2 bis 3 Gew.% eingesetzt werden sind z.B. Verdickungsmitteln, Harze, Weichmacher, Dispergiermittel, Cosolventien, Stabilisatoren, Benetzungsmittel, Konservierungsstoffe, Schauminhibitoren, Glas- oder Kunststoffperlen, Glas- oder Kunststoffhohlkörper, Gefrierschutzmittel, Antioxidantien, UV-Absorber, Epoxypulverlacke, Emulgatoren, Siloxane, organisch modifizierte Siloxane und Antistatika. Von den Hilfsstoffen können eines, zwei oder mehrere in Kombination eingesetzt werden. Geeignete Cosolventien sind z.B. Ethylenglykol, Diethylenglykol, Ethylenglykolalkylether (z.B. Cellosolve®-Typen), Diethylenglykolalkylether (z.B. Carbitol®-Typen), Carbitolacetat, Butylcarbitolacetat oder deren Mischungen. Verdickungsmittel sind z.B. Polyvinylalkohole, Cellulosederivate, Polyacrylsäuren oder Acrylsäure/Acrylatester Copolymere in Mengen von z.B. 0,01 bis 4 oder von 0,05 bis 1,5 oder von 0,1 bis 1 Gewichtsteilen, bezogen auf 100 Gewichtsteile Feststoff. Dispergiermittel sind z.B. Natriumhexametaphosphat, Natriumtripolyphosphate, oder Polycarbonsäuren. Gefrierschutzmittel sind z.B. Ethylenglykol oder Propylenglykol. Schauminhibitoren sind z.B. Silikone. Stabilisatoren sind z.B. polyvalente Metallverbindungen wie Zinkoxid, Zinkchlorid oder Zinksulfat.

In einer Ausführungsform enthält die Antidröhnmasse keine fluorierte Verbindung.

Das Maximum des Verlustfaktors tan delta liegt bei erfindungsgemäßen Antidröhnmassen vorzugsweise im Bereich von -30 bis +60°C. Im Falle der Verwendung von Kern-Schale-Partikeln oder von anderen Partikeln mit mehrphasiger Partikelstruktur, wobei die verschiedenen Polymerphasen unterschiedliche Glasübergangstemperaturen haben, gibt es in der Regel mindestens zwei Maxima des Verlustfaktors bei mindestens zwei verschiedenen Temperaturen. In diesem Fall liegen vorzugsweise alle Maxima des Verlustfaktors im Bereich von -30 bis +60 °C.

Gegenstand der Erfindung ist auch die Verwendung einer erfindungsgemäßen Antidröhnmasse zur Schwingungsdämpfung von Karosserieteilen eines Fahrzeugs oder als Masse für Unterbodenschutz eines Kraftfahrzeugs sowie ein Verfahren zur Dämpfung von Vibrationen oder Schwingungen von Bauteilen von Fahrzeugen, wobei

(1) eine oben näher beschriebene Antidröhnmasse mit einem Gehalt an einer erfindungsgemäß einzusetzenden Polymerdispersion zur Verfügung gestellt wird, und
(2) die Antidröhnmasse auf ein Bauteil eines Fahrzeuges aufgebracht und getrocknet wird.

Das Aufbringen kann auf übliche Art erfolgen, z.B. durch Streichen, Rollen oder Sprühen. Die aufgebrachte Menge ist vorzugsweise von 1 bis 7 kg/$m^2$ oder von 2 bis 6 kg/$m^2$ nach Trocknen. Das Trocknen kann bei Umgebungstemperatur oder vorzugsweise durch Anwendung von Wärme erfolgen. Die Trocknungstemperaturen sind vorzugsweise von 80 bis 210°C oder von 90 bis 180 °C oder von 120 bis 170 °C.
Die Antidröhnmasse kann beispielsweise angewendet werden in Fahrzeugen aller Art, insbesondere Straßenkraftfahrzeugen, Automobilen, Schienenfahrzeugen aber auch in Schiffen, Flugzeugen, elektrischen Maschinen, Baumaschinen und Gebäuden.
Die erfindungsgemäßen Antidröhnmassen haben gute anwendungstechnische Eigenschaften hinsichtlich guter Auftragbarkeit, guten schwingungsdämpfenden Eigenschaften, gutem Trocknungsverhalten, geringer Wasseraufnahme und guter Porosität der getrockneten Massen.

Beispiele

Einsatzstoffe:

| | |
|---|---|
| EHTG | 2-Ethylhexylthioglykolat |
| n-BA | n-Butylacrylat |
| MMA | Methylmethacrylat |
| SDS | Natriumdodecylsulfat |
| NaPS | Natriumperoxodisulfat |

Molekulargewichtsmessung

Das gewichtsmittlere Molekulargewicht wird gemessen mittels Gelpermeationschromatographie (GPC) nach der Methode der Größenausschlusschromatographie (SEC). Dabei wird die Elutionskurve mit Hilfe einer Polystyrol-Eichkurve in die Molekulargewichtsverteilungskurve umgerechnet. Es werden nur die löslichen Anteile vermessen, unlösliche Gelanteile werden abfiltriert. Bei der Messung werden folgende Parameter verwendet:

Größenausschlusschromatographie:

| | |
|---|---|
| SEC-Apparatur | Agilent 1100 Serie |
| Elutionsmittel | THF + 0,1% Trifluoressigsäure |
| Säulentemperatur | 35 °C |
| Durchflussgeschwindigkeit | 1 mL/min |
| Injektion | 100 µl |
| Konzentration | 2 mg/mL |

Die Probelösung wurde über Sartorius Minisart SRP 25 (0,2 µm) filtriert.
Folgende Trennsäulenkombination (Nr. 1,2,3 in Reihe hintereinander geschaltet) wurde verwendet:

| Nr. | Innendurchmesser mm | Länge cm | Trennmaterial | Ausschlußgrenze g/mol | Säulen bezeichnung |
|---|---|---|---|---|---|
| 1 | 7,5 | 5 | Plgel 10µ Guard Vorsäule | | PLgel Vorsäule |

(fortgesetzt)

| Nr. | Innendurchmesser mm | Länge cm | Trennmaterial | Ausschlußgrenze g/mol | Säulen bezeichnung |
|---|---|---|---|---|---|
| 2 | 7,5 | 30 | Plgel 10µm | 500 - 10000000 | PLgel MIXED-B (Hersteller Agilent) |
| 3 | 7,5 | 30 | Plgel 10µm | 500 - 10000000 | PLgel MIXED-B (Hersteller Agilent) |

Bodenzahl der Kombination bei der angegebenen Durchflussgeschwindigkeit: 40000 Detektor: DRI Agilent 1100UV Agilent 1100 VWD [254nm].

Die Kalibrierung erfolgt mit eng verteilten Polystyrol-Standards der Fa. Polymer Laboratories mit Molekulargewichten von M = 580 bis M 6.870.000, sowie Hexylbenzol (M = 162). Die Werte außerhalb des Elutionsbereiches werden extrapoliert.

Aus den Verteilungskurven lassen sich die mittleren Molmassen wie Zahlenmittel Mn (g/mol) oder Gewichtsmittel Mw (g/mol) bestimmen.

Beispiele B1 bis B7 : Herstellung der Polymerdispersionen

Die Dispersionen wurden nach folgender Rezeptur hergestellt:

Die Reaktorvorlage wir nacheinander mit 188,10 g vollentsalztem Wasser, 2,75 g Acrylsäure und 2,64 g 25-%iger wässriger NH3-Lösung befüllt, mit einem Ankerrührwerk mit 150 U/min gerührt und auf 92°C geheizt. Bei 92°C wird innerhalb von 3 min 5 Gew.-% des Emulsionszulaufs zugegeben und anschließend weitere 2 min gerührt. Dann wird innerhalb von 2 min die Initiatorvorlage zugegeben und weitere 3 min gerührt. Anschließend werden der Emulsionszulauf innerhalb 3,5 h und der Initiatorzulauf innerhalb 4 h zugefahren. Dann wird 10,95 g vollentsalztes Wasser zugegeben und für 30 min weitergerührt. Es werden weitere 15,90 g vollentsalztes Wasser zugegeben und auf Raumtemperatur gekühlt. Mit einer 10-%igen wässrigen NaOH Lösung wird der pH auf 7-9 eingestellt.

Die Zusammensetzungen der Emulsionszuläufe in Gramm sind in nachfolgender Tabelle dargestellt:

| | B1 | B2 | B3 | B4 | B5 | B6 | B7 |
|---|---|---|---|---|---|---|---|
| Wasser | 196,38 | 180,02 | 181,83 | 183,15 | 184,09 | 184,53 | 191,26 |
| SDS (15%) | 16 | 14,67 | 14,67 | 14,67 | 14,67 | 14,67 | 14,67 |
| n-BA | 297 | 272,25 | 272,25 | 272,25 | 272,25 | 272,25 | 272,25 |
| MMA | 300 | 275 | 275 | 275 | 275 | 275 | 275 |
| EHTG | 0 | 0 | 2,20 | 3,85 | 4,95 | 5,50 | 13,75 |

Die Initiatorvorlage in Gramm ist in nachfolgender Tabelle aufgeführt:

| | B1 | B2 | B3 | B4 | B5 | B6 | B7 |
|---|---|---|---|---|---|---|---|
| NaPS (7%) | 10,29 | 9,43 | 9,43 | 9,43 | 9,43 | 9,43 | 9,43 |

Die Menge Initiatorlösung in Gramm die jeweils in 4 h zugefahren wird ist in nachfolgender Tabelle aufgeführt:

| | B1 | B2 | B3 | B4 | B5 | B6 | B7 |
|---|---|---|---|---|---|---|---|
| NaPS (7%) | 41,14 | 37,71 | 37,71 | 37,71 | 37,71 | 37,71 | 37,71 |

Um B1 herzustellen, wurde die Polymerisation bei 75 °C anstelle 90 °C durchgeführt. Außerdem war die Reaktorvorlage bei B1 mit 205,20 g VE-Wasser, 3,0 g Acrylsäure und 2,88 g 25-%iger wässriger NH3-Lösung beschickt.

Die analytischen Daten der hergestellten Dispersionen, sowie die durch GPC bestimmten gewichtsmittleren Molekulargewichte der Dispersionen sind in folgender Tabelle zusammengestellt:

| | B1 | B2 | B3 | B4 | B5 | B6 | B7 |
|---|---|---|---|---|---|---|---|
| FG | 54,1 | 54,6 | 55,2 | 54,7 | 54 | 54,8 | 53,6 |
| Mw | 413000 | 330000 | 87000 | 50000 | 41600 | 42700 | 15900 |

Beispiele für Antidröhnmassen

Antidröhnmasse A1:

Die wässrige Dispersion B1 wird bei Raumtemperatur im Verhältnis 25:75 (bezogen auf Feststoffe) mit den Füllstoffen Bariumsulfat, Kreide (Omyacarb® 20BG) und Epoxypulverlack (EP-Korro-Grundierung Tiefschwarz GL) im Verhältnis 46,5:46,5:7 (bezogen auf Feststoffe) sowie 4% Diethylenglycol, 0,6% Viskalex® HV30 (Verdicker), 0,4% Lumiten I-SC (Emulgator), 1% Hexamoll DINCH (Weichmacher) und 0,2% EFKA 3580 (organisch modifiziertes Siloxan) mittels eines Dissolverrührers vermischt und anschließend im Speedmixer homogenisiert.

Antidröhnmasse A2:

Wie Antidröhnmasse A1 unter Verwendung von Dispersion B2 statt B1.

Antidröhnmasse A3:

Wie Antidröhnmasse A1 unter Verwendung von Dispersion B3 statt B1.

Antidröhnmasse A4:

Wie Antidröhnmasse A1 unter Verwendung von Dispersion B4 statt B1.

Antidröhnmasse A5:

Wie Antidröhnmasse A1 unter Verwendung von Dispersion B5 statt B1.

Antidröhnmasse A6:

Wie Antidröhnmasse A1 unter Verwendung von Dispersion B6 statt B1.

Antidröhnmasse A7:

Wie Antidröhnmasse A1 unter Verwendung von Dispersion B7 statt B1.

Beschreibung der Mischaggregate:

Speedmixer: Es kommt ein SpeedMixer DAC 400FVZ der Firma Hausschild zum Einsatz.
Dissolverrührer: Die Apparatur besteht aus einem Rührwerk, einer damit angetriebenen Welle sowie einer Dissolverscheibe als Rührwerkzeug.

Anwendungstechnische Prüfungen

Bestimmung der Wasseraufnahme:

Die Bestimmung der Wasseraufnahme wird in Anlehnung an die DIN EN ISO 62:2008 durchgeführt. Dazu werden von den erstellten Antidröhnmassen A1 bis A7 Filme einer Stärke von ca. 2 mm und einer Seitenlänge von je 25 mm hergestellt. Die Filme werden 30 min bei 160°C getrocknet und 24h beziehungsweise 7 Tage in demineralisiertem Wasser gelagert. Bestimmt wird die relative Massezunahme bei Lagerung in Prozent.

Trocknungsverhalten:

i: Blasenbildung:
Die Antidröhnmasse der Stärke 3 mm und der Kantenlänge 60 mm x 100 mm wird nach 30 min Trocknung bei 160°C optisch beurteilt. Dabei findet folgende Notenskala Verwendung:

1: keine Blasen
2: 2-3 kleine Blasen
3: leichte Anhebung der Masse
4: große Blase, komplette Masse wölbt sich

ii: Porosität:
Die Antidröhnmasse der Stärke 3 mm und der Kantenlänge 60 mm x 100 mm wird nach 30 min Trocknung bei 160°C optisch beurteilt. Dabei findet folgende Notenskala Verwendung:

1: gleichmäßige, feine Poren
2: feine bis mittlere Poren
3: gleichmäßige, mittlere Poren,
4: mittlere bis grobe Poren.

iii: Volumenexpansion:
Die Antidröhnmasse der Stärke 3 mm und der Kantenlänge 60 mm x 100 mm wird 30 min bei 160°C getrocknet. Im Anschluss wird die Stärke der Masse erneut gemessen und die absolute Höhendifferenz zur Stärke vor Trocknung in mm ermittelt.

Die Ergebnisse sind in Tabelle 1 und in den Figuren 1 und 2 aufgeführt.

Figur 1 zeigt eine graphische Darstellung der Wasseraufnahme von Antidröhnmassenbeschichtungen in Gew.% in Abhängigkeit vom gewichtsmittleren Molekulargewicht des polymeren Bindemittels. Die untere Linie stellt die Wasseraufnahme nach einem Tag (24 h) dar. Die obere Linie stellt die Wasseraufnahme nach 7 Tagen dar.

Figur 2 zeigt eine graphische Darstellung der Volumenexpansion von Antidröhnmassenbeschichtungen in mm in Abhängigkeit vom gewichtsmittleren Molekulargewicht des polymeren Bindemittels.

Tabelle 1: Ergebnisse der anwendungstechnischen Prüfungen:

| Beispiel | Mw [1)] | WA-1d [%] [2)] | WA-7d [%] [3)] | Porosität | Blasenbildung | Volumenexpansion [mm] |
|---|---|---|---|---|---|---|
| A1 | 413000 | 6 | 9 | 2 | 1 | 0,8 |
| A2 | 330000 | 5 | 8 | 1 | 1 | 0,4 |
| A3 | 87000 | 7 | 11 | 1 | 1 | 0,4 |
| A4 | 50000 | 8 | 13 | 1 | 3 | 0,7 |
| A5 | 41600 | 10 | 17 | 1 | 1 | 0,5 |
| A6 | 42700 | 11 | 20 | 1 | 1 | 1,0 |
| A7 | 15900 | 15 | 21 | 1 | 1 | 0,6 |

[1)] gewichtsmittleres Molekulargewicht des polymeren Bindemittels
[2)] Wasseraufnahme nach einem Tag (24 h)
[3)] Wasseraufnahme nach 7 Tagen

Die Ergebnisse zeigen, dass in Abhängigkeit vom Molekulargewicht mit erfindungsgemäßen Polymerdispersionen eine gute Wasseraufnahme (WA-1d < 7%; WA-7d <11%), eine gute Porosität und geringe Blasenbildung (kleiner 2) der Beschichtung und eine verringerte Volumenexpansion der Beschichtung erreicht werden kann.

## Patentansprüche

1. **1.** Verwendung einer Polymerdispersion zur Herstellung von Antidröhnmassen, wobei die Polymerdispersion mindestens ein Polymer enthält welches erhältlich ist durch Emulsionspolymerisation von radikalisch polymerisierbaren Monomeren und das Polymer ein gewichtsmittleres Molekulargewicht von mehr als 100000, vorzugsweise von mehr als 100000 bis 350000 aufweist, wobei das Molekulargewicht gemessen wird mittels Gelpermeationschromatographie nach der Methode der Größenausschlusschromatographie mit Hilfe einer Polystyrol-Eichkurve,
wobei das Polymer aufgebaut ist aus

   (a) 25 bis 75 Gew.% mindestens eines Monomeren, welches, wenn es als Homopolymer polymerisiert ist, eine Glasübergangstemperatur von kleiner als 0°C, vorzugsweise von kleiner als -20°C aufweist;
   (b) 24 bis 75 Gew.% mindestens eines Monomeren, welches, wenn es als Homopolymer polymerisiert ist, eine Glasübergangstemperatur von größer als 0°C, vorzugsweise von größer als 50°C aufweist, ausgewählt aus Methylacrylat, tert.-Butylacrylat, Methylmethacrylat, Ethylmethacrylat, n-Butylmethacrylat, iso-Butylmethacrylat, tert.-Butylmethacrylat, Acrylnitril, Methacrylnitril, Vinylacetat, (Meth)acrylamid; und
   (c) 0 bis 5 Gew.% mindestens eines von den Monomeren (a) und (b) verschiedenen Monomeren mit mindestens einer Säuregruppe,

   und wobei die Antidröhnmasse besteht aus

   (a) 5 bis 50 Gew.% der Polymerdispersion, wobei sich die Mengenangabe auf den Feststoffgehalt der Polymerdispersion bezieht,
   (b) 40 bis 80 Gew.% anorganische Füllstoffe,
   (c) 0 bis 40 Gew.% organische Füllstoffe, ausgewählt aus Pulverlacken, Polymerpulvern aus gemahlenen Ethylen/Vinylacetat Copolymer-Festharzen und Polymerpulvern aus getrockneten Acrylatdispersionen,
   (d) 10 bis 40 Gew.% Wasser und
   (e) 0 bis 10 Gew.% Hilfsstoffe,

   wobei die Glasübergangstemperatur gemessen wird als Mittelpunktstemperatur durch Differential Scanning Calorimetrie gemäß der Norm ASTM D 3418-08.

2. **2.** Verwendung nach Anspruch 1, **dadurch gekennzeichnet, dass** das durch Emulsionspolymerisation erhältliche Polymer zu mindestens 60 Gew.-% aufgebaut ist aus Hauptmonomeren, welche ausgewählt sind aus Alkyl(meth)acrylaten mit 1-20 C-Atomen in der Alkylgruppe, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

3. **3.** Verwendung gemäß dem vorhergehenden Anspruch, **dadurch gekennzeichnet, dass** das Polymer zu mindestens 60 Gew. % aus Alkyl(meth)acrylaten mit 1 bis 10 C-Atomen in der Alkylgruppe aufgebaut ist.

4. **4.** Verwendung nach einem der vorherigen Ansprüche, **dadurch gekennzeichnet, dass** das Polymer aufgebaut ist aus

   (a) 25 bis 70 Gew.% mindestens eines Monomeren, welches, wenn es als Homopolymer polymerisiert ist, eine Glasübergangstemperatur von kleiner als 0°C, vorzugsweise von kleiner als -20°C aufweist;
   (b) 29 bis 75 Gew.% mindestens eines Monomeren, welches, wenn es als Homopolymer polymerisiert ist, eine Glasübergangstemperatur von größer als 0°C, vorzugsweise von größer als 50°C aufweist, ausgewählt aus Methylacrylat, tert.-Butylacrylat, Methylmethacrylat, Ethylmethacrylat, n-Butylmethacrylat, iso-Butylmethacrylat, tert.-Butylmethacrylat, Acrylnitril, Methacrylnitril, Vinylacetat, (Meth)-acrylamid; und
   (c) 0 bis 5 Gew.% mindestens eines von den Monomeren (a) und (b) verschiedenen Monomeren mit mindestens einer Säuregruppe,

   wobei die Glasübergangstemperatur gemessen wird als Mittelpunktstemperatur durch Differential Scanning Calorimetrie gemäß der Norm ASTM D 3418-08.

5. **5.** Verwendung gemäß einem der vorhergehenden Ansprüche, **dadurch gekennzeichnet, dass** das Polymer aufgebaut ist aus

(a) 25 bis 75 Gew.% n-Butylacrylat,
(b) 24 bis 75 Gew.% Methylmethacrylat,
(c) 0,3 bis 3 Gew.% mindestens eines Säuremonomers ausgewählt aus Acrylsäure, Methacrylsäure und deren Gemisch.

6. Verwendung nach einem der vorherigen Ansprüche, **dadurch gekennzeichnet, dass** die Glasübergangstemperatur des durch Emulsionspolymerisation hergestellten Polymers im Bereich von -60 °C bis kleiner oder gleich +70 °C liegt, wobei die Glasübergangstemperatur gemessen wird als Mittelpunktstemperatur durch Differential Scanning Calorimetrie gemäß der Norm ASTM D 3418-08.

7. Verwendung nach einem der vorherigen Ansprüche, **dadurch gekennzeichnet, dass** bei der Emulsionspolymerisation Molekulargewichtsregler in einer Menge von weniger als 0,4 Gewichtsteilen auf 100 Gewichtsteile Monomere oder keine Molekulargewichtsregler eingesetzt werden; und/oder dass die Emulsionspolymerisation bei Temperaturen kleiner 90 °C durchgeführt wird; und/oder dass bei der Emulsionspolymerisation Initiatoren in einer Menge von 0,1 bis weniger als 0,6 Gewichtsteilen auf 100 Gewichtsteile Monomere eingesetzt werden; und/oder bei der Emulsionspolymerisation vernetzende Monomere in einer Menge von weniger als 0,2 Gewichtsteilen auf 100 Gewichtsteile Monomere oder keine vernetzende Monomere eingesetzt werden.

8. Verwendung nach einem der vorherigen Ansprüche, **dadurch gekennzeichnet, dass** die Emulsionspolymerisation einstufig und/oder ohne Verwendung von Schutzkolloiden erfolgt.

9. Verwendung nach einem der vorherigen Ansprüche, **dadurch gekennzeichnet, dass** die Antidröhnmasse keine fluorierte Verbindung enthält.

10. Antidröhnmasse, bestehend aus

(a) 5 bis 50 Gew.% der Polymerdispersion mit den Merkmalen gemäß einem der vorhergehenden Ansprüche, wobei sich die Mengenangabe auf den Feststoffgehalt der Polymerdispersion bezieht,
(b) 40 bis 80 Gew.% anorganische Füllstoffe,
(c) 0 bis 40 Gew.% organische Füllstoffe, ausgewählt aus Pulverlacken, Polymerpulvern aus gemahlenen Ethylen/Vinylacetat Copolymer-Festharzen und Polymerpulvern aus getrockneten Acrylatdispersionen,
(d) 10 bis 40 Gew.% Wasser und
(e) 0 bis 10 Gew.% Hilfsstoffe.

11. Antidröhnmasse dem vorhergehenden Anspruch, **dadurch gekennzeichnet, dass** die anorganischen Füllstoffe ausgewählt sind aus Kaolin, Kreide, Bariumsulfat, Ruß, Graphit, Talkum, Tonmineralien, Mikrodolomit, Quarzmehl und Glimmer; die organischen Füllstoffe ausgewählt sind aus Pulverlacken, Polymerpulvern aus zum Beispiel gemahlenen Ethylen/Vinylacetat Copolymer-Festharzen, getrockneten Acrylatdispersionen; und die Hilfsstoffe zu mindestens 0,1 Gew.% eingesetzt werden und ausgewählt sind aus Verdickungsmitteln, Harzen, Weichmachern, Dispergiermitteln, Cosolventien, Stabilisatoren, Benetzungsmitteln, Konservierungsstoffen, Schauminhibitoren, Glas- oder Kunststoffperlen, Glas- oder Kunststoffhohlkörpern, Gefrierschutzmitteln, Antioxidantien, UV-Absorbern, Emulgatoren, Siloxanen, organisch modifizierten Siloxanen und Antistatika.

12. Verwendung einer Antidröhnmasse nach einem der Ansprüche 10 bis 11 zur Schwingungsdämpfung von Karosserieteilen eines Fahrzeugs oder als Masse für Unterbodenschutz eines Kraftfahrzeugs.

13. Verfahren zur Dämpfung von Vibrationen oder Schwingungen von Bauteilen von Fahrzeugen, wobei

(1) eine Antidröhnmasse gemäß einem den Ansprüche 10 bis 11 zur Verfügung gestellt wird, und
(2) die Antidröhnmasse auf ein Bauteil eines Fahrzeuges aufgebracht und getrocknet wird.

## Claims

1. The use of a polymer dispersion for producing sound deadener compositions, the polymer dispersion comprising at least one polymer obtainable by emulsion polymerization of radically polymerizable monomers, and the polymer having a weight-average molecular weight of more than 100 000, preferably of more than 100 000 to 350 000, the molecular weight being measured by means of gel permeation chromatography by the method of size extrusion

chromatography with the aid of a polystyrene calibration curve,
the polymer being composed of

(a)25 to 75 wt% of at least one monomer which when polymerized as a homopolymer has a glass transition temperature of less than 0°C, preferably of less than -20°C;
(b)24 to 75 wt% of at least one monomer which when polymerized as a homopolymer has a glass transition temperature of greater than 0°C, preferably of greater than 50°C, selected from methyl acrylate, tert-butyl acrylate, methyl methacrylate, ethyl methacrylate, n-butyl methacrylate, isobutyl methacrylate, tert-butyl methacrylate, acrylonitrile, methacrylonitrile, vinyl acetate, (meth)acrylamide; and
(c)0 to 5 wt% of at least one monomer different from the monomers (a) and (b) and having at least one acid group,

and the sound deadener composition consisting of

(a)5 to 50 wt% of the polymer dispersion, the quantity figure being based on the solids content of the polymer dispersion,
(b)40 to 80 wt% of inorganic fillers,
(c)0 to 40 wt% of organic fillers, selected from powder coating materials, polymer powders of ground solid ethylene/vinyl acetate copolymer resins, and polymer powders of dried acrylate dispersions,
(d)10 to 40 wt% of water, and
(e)0 to 10 wt% of auxiliaries,

the glass transition temperature being measured as the midpoint temperature by means of differential scanning calorimetry according to standard ASTM D 3418-08.

**2.** The use according to claim 1, wherein the polymer obtainable by emulsion polymerization is composed to an extent of at least 60 wt% of principal monomers which are selected from alkyl (meth)acrylates having 1-20 C atoms in the alkyl group, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds or mixtures of these monomers.

**3.** The use according to the preceding claim, wherein the polymer is composed to an extent of at least 60 wt% of alkyl (meth)acrylates having 1 to 10 C atoms in the alkyl group.

**4.** The use according to any of the preceding claims, wherein the polymer is composed of

(a)25 to 70 wt% of at least one monomer which when polymerized as a homopolymer has a glass transition temperature of less than 0°C, preferably of less than -20°C;
(b)29 to 75 wt% of at least one monomer which when polymerized as a homopolymer has a glass transition temperature of greater than 0°C, preferably of greater than 50°C, selected from methyl acrylate, tert-butyl acrylate, methyl methacrylate, ethyl methacrylate, n-butyl methacrylate, isobutyl methacrylate, tert-butyl methacrylate, acrylonitrile, methacrylonitrile, vinyl acetate, (meth)acrylamide; and
(c)0 to 5 wt% of at least one monomer different from the monomers (a) and (b) and having at least one acid group,

the glass transition temperature being measured as the midpoint temperature by means of differential scanning calorimetry according to standard ASTM D 3418-08.

**5.** The use according to any of the preceding claims, wherein the polymer is composed of

(a)25 to 75 wt% of n-butyl acrylate,
(b)24 to 75 wt% of methyl methacrylate,
(c)0,3 to 3 wt% of at least one acid monomer selected from acrylic acid, methacrylic acid, and a mixture thereof.

**6.** The use according to any of the preceding claims, wherein the glass transition temperature of the polymer prepared by emulsion polymerization is in the range from -60°C to less than or equal to +70°C, the glass transition temperature being measured as the midpoint temperature by means of differential scanning calorimetry according to standard ASTM D 3418-08.

**7.** The use according to any of the preceding claims, wherein chain transfer agents are used in the emulsion polymerization in an amount of less than 0.4 part by weight per 100 parts by weight of monomers, or no chain transfer agents are used; and/or wherein the emulsion polymerization is carried out at temperatures of less than 90°C; and/or wherein initiators are used in the emulsion polymerization in an amount of 0.1 to less than 0.6 part by weight per 100 parts by weight of monomers; and/or wherein crosslinking monomers are used in the emulsion polymerization in an amount of less than 0.2 part by weight per 100 parts by weight of monomers, or no crosslinking monomers are used.

**8.** The use according to any of the preceding claims, wherein the emulsion polymerization takes place in one stage and/or without use of protective colloids.

**9.** The use according to any of the preceding claims, wherein the sound deadener composition comprises no fluorinated compound.

**10.** A sound deadener composition, consisting of

(a)5 to 50 wt% of the polymer dispersion having the features according to any of the preceding claims, the quantity figure being based on the solids content of the polymer dispersion,
(b)40 to 80 wt% of inorganic fillers,
(c)0 to 40 wt% of organic fillers, selected from powder coating materials, polymer powders of ground solid ethylene/vinyl acetate copolymer resins, and polymer powders of dried acrylate dispersions,
(d)10 to 40 wt% of water, and
(e)0 to 10 wt% of auxiliaries.

**11.** The sound deadener composition according to the preceding claim, wherein the inorganic fillers are selected from kaolin, chalk, barium sulfate, carbon black, graphite, talc, clay minerals, microdolomite, finely ground quartz, and mica, the organic fillers are selected from powder coating materials, polymer powders of, for example, ground solid ethylene/vinyl acetate copolymer resins, dried acrylate dispersions, and the auxiliaries are used at not less than 0.1 wt% and are selected from thickeners, resins, plasticizers, dispersants, cosolvents, stabilizers, wetting agents, preservatives, foam inhibitors, glass beads or plastics beads, hollow glass or plastics bodies, antifreeze agents, antioxidants, UV absorbers, emulsifiers, siloxanes, organically modified siloxanes, and antistats.

**12.** The use of a sound deadener composition according to either of claims 10 to 11 for vibration damping of bodywork parts of a vehicle or as a composition for underbody protection on a motor vehicle.

**13.** A method for damping oscillations or vibrations of vehicle components, where

(1)a sound deadener composition according to either of claims 10 to 11 is provided, and
(2)the sound deadener composition is applied to a vehicle component and dried.

**Revendications**

**1.** Utilisation d'une dispersion de polymère pour la fabrication de masses insonorisantes, la dispersion de polymère contenant au moins un polymère qui peut être obtenu par polymérisation en émulsion de monomères polymérisables par voie radicalaire et le polymère présentant un poids moléculaire moyen en poids de plus de 100 000, de préférence de plus de 100 000 à 350 000, le poids moléculaire étant mesuré par chromatographie par perméation de gel selon la méthode de chromatographie d'exclusion stérique à l'aide d'une courbe d'étalonnage de polystyrène,
le polymère étant formé par :

(a) 25 à 75 % en poids d'au moins un monomère, qui, lorsqu'il est polymérisé sous la forme d'un homopolymère, présente une température de transition vitreuse inférieure à 0 °C, de préférence inférieure à -20 °C ;
(b) 24 à 75 % en poids d'au moins un monomère qui, lorsqu'il est polymérisé sous la forme d'un homopolymère, présente une température de transition vitreuse supérieure à 0 °C, de préférence supérieure à 50 °C, choisi parmi l'acrylate de méthyle, l'acrylate de tert.-butyle, le méthacrylate de méthyle, le méthacrylate d'éthyle, le méthacrylate de n-butyle, le méthacrylate d'isobutyle, le méthacrylate de tert.-butyle, l'acrylonitrile, le méthacrylonitrile, l'acétate de vinyle, le (méth)acrylamide ; et
(c) 0 à 5 % en poids d'au moins un monomère différent des monomères (a) et (b) contenant au moins un groupe acide,

et la masse insonorisante étant constituée par :

(a) 5 à 50 % en poids de la dispersion de polymère, l'indication de quantité se rapportant à la teneur en solides de la dispersion de polymère,
(b) 40 à 80 % en poids de charges inorganiques,
(c) 0 à 40 % en poids de charges organiques, choisies parmi les vernis en poudre, les poudres polymères de résines solides de copolymère d'éthylène/acétate de vinyle broyées et les poudres polymères de dispersions d'acrylate séchées,
(d) 10 à 40 % en poids d'eau et
(e) 0 à 10 % en poids d'adjuvants,

la température de transition vitreuse étant mesurée en tant que température centrale par calorimétrie à balayage différentiel selon la norme ASTM D 3418-08.

2. Utilisation selon la revendication 1, **caractérisée en ce que** le polymère pouvant être obtenu par polymérisation en émulsion est formé par au moins 60 % en poids de monomères principaux, qui sont choisis parmi les (méth)acrylates d'alkyle contenant 1 à 20 atomes C dans le groupe alkyle, les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atomes C et une ou deux doubles liaisons ou les mélanges de ces monomères.

3. Utilisation selon la revendication précédente, **caractérisée en ce que** le polymère est formé par au moins 60 % en poids de (méth)acrylates d'alkyle contenant 1 à 10 atomes C dans le groupe alkyle.

4. Utilisation selon l'une quelconque des revendications précédentes, **caractérisée en ce que** le polymère est formé par :

(a) 25 à 70 % en poids d'au moins un monomère qui, lorsqu'il est polymérisé sous la forme d'un homopolymère, présente une température de transition vitreuse inférieure à 0 °C, de préférence inférieure à -20 °C ;
(b) 29 à 75 % en poids d'au moins un monomère, qui, lorsqu'il est polymérisé sous la forme d'un homopolymère, présente une température de transition vitreuse supérieure à 0 °C, de préférence supérieure à 50 °C, choisi parmi l'acrylate de méthyle, l'acrylate de tert.-butyle, le méthacrylate de méthyle, le méthacrylate d'éthyle, le méthacrylate de n-butyle, le méthacrylate d'isobutyle, le méthacrylate de tert.-butyle, l'acrylonitrile, le méthacrylonitrile, l'acétate de vinyle, le (méth)acrylamide ; et
(c) 0 à 5 % en poids d'au moins un monomère différent des monomères (a) et (b) contenant au moins un groupe acide,

la température de transition vitreuse étant mesurée en tant que température centrale par calorimétrie à balayage différentiel selon la norme ASTM D 3418-08.

5. Utilisation selon l'une quelconque des revendications précédentes, **caractérisée en ce que** le polymère est formé par :

(a) 25 à 75 % en poids d'acrylate de n-butyle,
(b) 24 à 75 % en poids de méthacrylate de méthyle,
(c) 0,3 à 3 % en poids d'au moins un monomère acide choisi parmi l'acide acrylique, l'acide méthacrylique et leur mélange.

6. Utilisation selon l'une quelconque des revendications précédentes, **caractérisée en ce que** la température de transition vitreuse du polymère fabriqué par polymérisation en émulsion se situe dans la plage allant de -60 °C jusqu'à une température inférieure ou égale à +70 °C, la température de transition vitreuse étant mesurée en tant que température centrale par calorimétrie à balayage différentiel selon la norme ASTM D 3418-08.

7. Utilisation selon l'une quelconque des revendications précédentes, **caractérisée en ce que** des régulateurs du poids moléculaire sont utilisés lors de la polymérisation en émulsion en une quantité inférieure à 0,4 partie en poids pour 100 parties en poids de monomères ou aucun régulateur du poids moléculaire n'est utilisé ; et/ou **en ce que** la polymérisation en émulsion est réalisée à des températures inférieures à 90 °C ; et/ou **en ce que** des initiateurs sont utilisés lors de la polymérisation en émulsion en une quantité de 0,1 à moins de 0,6 partie en poids pour 100

parties en poids de monomères ; et/ou des monomères réticulants sont utilisés lors de la polymérisation en émulsion en une quantité inférieure à 0,2 partie en poids pour 100 parties en poids de monomères ou aucun monomère réticulant n'est utilisé.

**8.** Utilisation selon l'une quelconque des revendications précédentes, **caractérisée en ce que** la polymérisation en émulsion a lieu en une étape et/ou sans utilisation de colloïdes protecteurs.

**9.** Utilisation selon l'une quelconque des revendications précédentes, **caractérisée en ce que** la masse insonorisante ne contient pas de composé fluoré.

**10.** Masse insonorisante, constituée par :

(a) 5 à 50 % en poids de la dispersion de polymère ayant les caractéristiques selon l'une quelconque des revendications précédentes, l'indication de quantité se rapportant à la teneur en solides de la dispersion de polymère,
(b) 40 à 80 % en poids de charges inorganiques,
(c) 0 à 40 % en poids de charges organiques, choisies parmi les vernis en poudre, les poudres polymères de résines solides de copolymère d'éthylène/acétate de vinyle broyées et les poudres polymères de dispersions d'acrylate séchées,
(d) 10 à 40 % en poids d'eau et
(e) 0 à 10 % en poids d'adjuvants.

**11.** Masse insonorisante selon la revendication précédente, **caractérisée en ce que** les charges inorganiques sont choisies parmi le kaolin, la craie, le sulfate de baryum, le noir de carbone, le graphite, le talc, les minéraux argileux, la microdolomite, la farine de quartz et le mica ; les charges organiques sont choisies parmi les vernis en poudre, les poudres polymères par exemple de résines solides de copolymère d'éthylène/acétate de vinyle broyées, de dispersions d'acrylate séchées ; et les adjuvants sont utilisés à hauteur d'au moins 0,1 % en poids et sont choisis parmi les épaississants, les résines, les plastifiants, les dispersants, les co-solvants, les stabilisateurs, les agents mouillants, les conservateurs, les inhibiteurs de mousse, les perles de verre ou de plastique, les corps creux en verre ou en plastique, les agents antigel, les antioxydants, les absorbeurs UV, les émulsifiants, les siloxanes, les siloxanes modifiés organiquement et les antistatiques.

**12.** Utilisation d'une masse insonorisante selon l'une quelconque des revendications 10 à 11 pour l'amortissement des oscillations de parties de carrosserie d'un véhicule ou en tant que masse pour la protection du bas de caisse d'un véhicule à moteur.

**13.** Procédé d'amortissement des vibrations ou des oscillations de composants de véhicules, selon lequel

(1) une masse insonorisante selon l'une quelconque des revendications 10 à 11 est mise à disposition et
(2) la masse insonorisante est appliquée sur un composant d'un véhicule et séchée.

Figur 1

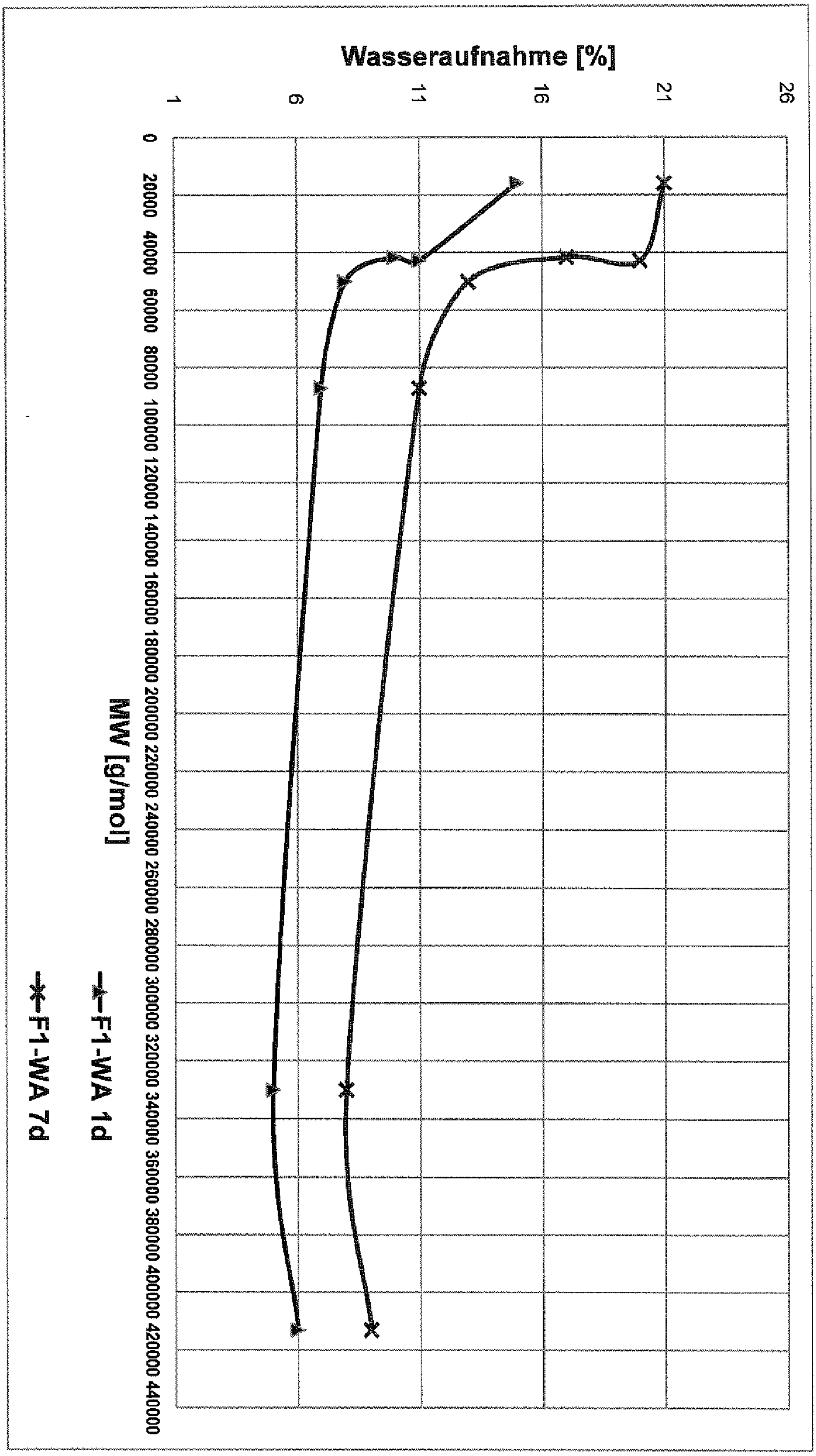
Wasseraufnahme [%]
1
6
11
16
21
26
0
20000
40000
60000
80000
100000
120000
140000
160000
180000
200000
220000
240000
260000
280000
300000
320000
340000
360000
380000
400000
420000
440000
MW [g/mol]
F1-WA 1d
F1-WA 7d

Figur 2

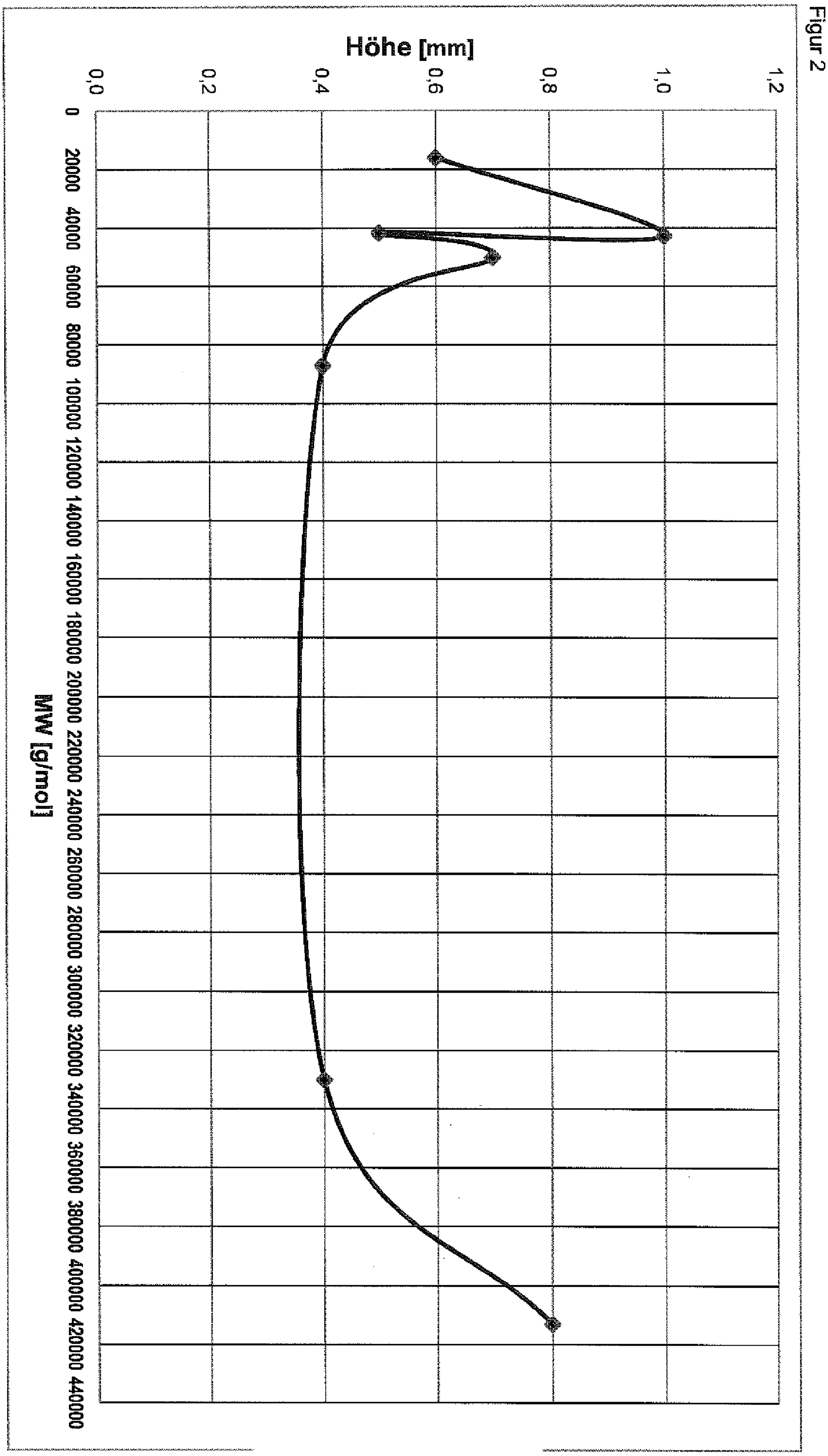
Höhe [mm]
0,0
0,2
0,4
0,6
0,8
1,0
1,2
MW [g/mol]
0
20000
40000
60000
80000
100000
120000
140000
160000
180000
200000
220000
240000
260000
280000
300000
320000
340000
360000
380000
400000
420000
440000

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20040033354 A
- US 6502821 B
- EP 1520865 A
- WO 2007034933 A
- EP 2420412 A
- WO 2012010632 A
- EP 81083 A
- DE 19954619


### In der Beschreibung aufgeführte Nicht-Patentliteratur


- *Journal of Materials Science,* 2001, vol. 36, 5733-5737
- **W. MÄCHTLE.** *Makromolekulare Chemie,* 1984, vol. 185, 1025-1039
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg Thieme Verlag, 1961, vol. 14/1, 192-208
- **T.G. FOX.** Bull. Am. Phys. Soc. 1956, vol. 1, 123
- Ullmann's Enzyklopädie der technischen Chemie. 1980, 17, , 18
- Ullmann's Encyclopedia of Industrial Chemistry. VCH, 1992, vol. A 21, 169
- **J. BRANDRUP ; E.H. IMMERGUT.** Polymer Handbook. J. Wiley, 1989